Europäisches Patentamt

European Patent Office

Office européen des brevets

(19)

(11) Veröffentlichungsnummer : **0 092 098
B1**

(12) **EUROPÄISCHE PATENTSCHRIFT**

(45) Veröffentlichungstag der Patentschrift :
18.06.86

(21) Anmeldenummer : 83103309.7

(22) Anmeldetag : 05.04.83

(51) Int. Cl.⁴ : **C 08 L 67/06, C 08 F283/00**

(54) Härtbare Polyesterformmassen.

(30) Priorität : 16.04.82 DE 3213946

(43) Veröffentlichungstag der Anmeldung :
26.10.83 Patentblatt 83/43

(45) Bekanntmachung des Hinweises auf die Patenterteilung : 18.06.86 Patentblatt 86/25

(84) Benannte Vertragsstaaten :
BE CH DE FR GB IT LI NL SE

(56) Entgegenhaltungen :
DE-A- 2 402 739
DE-A- 2 657 808

(73) Patentinhaber : BASF Aktiengesellschaft
Carl-Bosch-Strasse 38
D-6700 Ludwigshafen (DE)

(72) Erfinder : Hesse, Anton, Dr.
Peter-Nickel-Strasse 15
D-6940 Weinheim (DE)
Erfinder : Buensch, Hellmut, Dr.
Panoramastrasse 81
D-6906 Leimen (DE)
Erfinder : Heckmann, Walter, Dr.
Geiersbergstrasse 2
D-6940 Weinheim (DE)
Erfinder : Lawonn, Horst, Ing. grad.
Stettiner Strasse 6
D-6703 Limburgerhof (DE)

EP 0 092 098 B1

Jouve, 18, rue St-Denis, 75001 Paris, France

**Beschreibung**

Formteile aus gehärteten faserverstärkten Polyesterharzen sind insbesondere dann spröde, wenn die Polyestermatrix aufgrund ihres chemischen Aufbaus eine hohe Wärmeformbeständigkeit aufweist. Bei Stoßbeanspruchung des Formteils kann dies zu Rißbildung in der Matrix führen, noch bevor eine deutliche Schädigung der Verstärkungsfasern optisch zu erkennen ist. Matrixschädigungen durch Rißbildung können aber auch bereits während der Härtung eintreten, wenn diese zur Erzielung kurzer Zykluszeiten verhältnismäßig schnell durchgeführt wird. Eine solche Rißbildung hat zur Folge, daß Flüssigkeiten, die mit dem Formteil in Berührung kommen, in die Risse eindiffundieren und die Fasern schädigen können.

Zur Verbesserung der Zähigkeit und Verringerung der Rißanfälligkeit bei Schlageinwirkung von Polyesterformteilen, wurde verschiedentlich vorgeschlagen, den Polyesterformmassen Kautschuke zuzusetzen. Nach der DE-A-20 14 774 sollen zu hitzehärtbaren Polyesterharzen 5 bis 15 % eines Polydienkautschuks zugesetzt werden. Als Polydienkautschuke sind dabei auch Butadien/Styrol-Blockcopolymere genannt. Diese Blockcopolymere wirken auch schrumpfmindernd und erhöhen die Oberflächenglätte der Formteile. Da Kautschuke selbst mit ungesättigten Polyestern nicht mischbar sind, werden sie gewöhnlich als styrolische Lösung in den styrolischen Polyester-Lösungen emulgiert. Da diese Emulsionen jedoch nicht stabil sind und sich in kurzer Zeit entmischen, ist die Handhabung solcher Systeme schwierig. Sie haben sich daher auf solchen Anwendungsgebieten, bei denen flüssige Polyesterharze verarbeitet werden, z. B. Handlaminieren, Wickelverfahren, Strangziehen, nicht durchsetzen können. Entsprechende Formteile haben nämlich wegen der schlechten Kautschukverteilung ein niedriges mechanisches Eigenschaftsniveau und eine unregelmäßige Oberflächenstruktur.

Günstigere Voraussetzungen liegen bei solchen Anwendungen vor, bei denen Polyesterharze zusammen mit hohen Füllstoffanteilen und insbesondere in eingedickter Form verarbeitet werden, z. B. als flächiges Halbzeug (SMC). Dort kann es aber während der Eindickung der Formmasse zu einem Ausschwitzen der Kautschukphase kommen. Dies führt dann zu erhöhter Klebrigkeit der SMC-Formmasse, zu Belagbildung am Preßwerkzeug und zu matten Flecken an der Formteiloberfläche.

Es wurde deshalb schon vorgeschlagen (z. B. in der DE-A-27 17 226), carboxylgruppenhaltige Kautschuke einzusetzen, die bei der Eindickung mit dem Eindickmittel, z. B. MgO, eine Salzbildung eingehen. Die Oberflächenqualität der Formteile wird dadurch zwar verbessert, die nachteilige Phasenabtrennung kann dadurch nicht beseitigt werden.

In der DE-A-24 02 739 wird empfohlen, die Verträglichkeit von Polyesterharzen und sogenannten Nieder-Profil-Additiven (als welche z. B. auch Polydien-Kautschuke verwendet werken können) durch Zusatz von Stabilisatoren auf Basis von anionisch hergestellten Styrol/Ethylenoxid- oder Butadien/Ethylenoxid-Blockcopolymeren zu verbessern. Die Herstellung dieser Blockcopolymeren ist jedoch schwierig, derartige Stabilisatoren werden daher in der Praxis nicht eingesetzt.

In der DE-A-25 34 039 sind Formmassen beschrieben aus Vinylesterharzen, einem « Nieder-Profil-Additiv » (z. B. Polydien-Kautschuken) und Füllstoffen, die als viskositätsvermindernes Mittel ein Copolymer aus dem Maleinsäurehalb- ester eines Polyethylenglykols mit Molekulargewicht von 140 bis 6 000 und einem alkenylaromatischen Monomeren enthalten sollen. Es hat sich gezeigt, daß Polyalkylenethermischpolymerisate auf Basis eines derart niedermolekularen Polyethylenglykols nicht in der Lage sind, Emulsionen von Polydien-Kautschuken in styrolischen Polyesterlösungen zu verbessern.

Die DE-A-26 57 808 betrifft schließlich härtbare Polyesterformmassen, die 0,1 bis 25 % eines Polyalkylenethermischpolymerisats enthalten. Diese wirken als Niederschrumpf-Komponente, sie verbessern somit die Oberfläche und verringern die Schrumpfneigung der ausgehärteten Formteile. Im Gegensatz zu den üblichen schrumpfmindernden Zusätzen, wie Polystyrol oder Polymethylmethacrylat, sind diese Polyalkylenethermischpolymerisate gut verträglich mit styrolischen Polyester-Lösungen. Von einem Zusatz elastomerer Blockcopolymerisate zu den Polyesterformmassen oder gar von einer Verbesserung der Verträglichkeit solcher Zusätze mit dem Polyester durch die Polyalkylenethermischpolymerisate ist in der DE-A-26 57 808 nicht die Rede.

Der Erfindung lag nun die Aufgabe zugrunde, ungesättigte Polyester-Formmassen zu entwickeln, in denen mit Hilfe eines Stabilisators elastomere Blockcopolymere in styrolischen Polyesterlösungen gut emulgiert sind. Durch diesen Stabilisator soll im ausgehärteten Formteil eine gleichmäßige, feine Verteilung der Kautschukpartikel in der Polyestermatrix bewirkt werden, so daß die Formteile eine hohe Schlagzähigkeit, geringe Rißanfälligkeit, gute mechanische Eigenschaften und darüberhinaus eine gleichmäßige, glatte Oberfläche aufweisen. Ein besonderes Ziel der Erfindung war es, stabile niedrigviskose Formmassen aus Polyesterharzen und elastifizierenden Kautschuken bereitzustellen, die zur Herstellung von füllstoff-freien oder füllstoffarmen glasfaserverstärkten Polyester-Teilen geeignet sind.

Diese Aufgaben werden durch die anspruchsgemäßen ungesättigten Polyesterformmassen gelöst. Diese enthalten folgende Bestandteile :

A. Als ungesättigte Polyester eignen sich die üblichen Polykondensationsprodukte aus mehrwertigen, insbesondere zweiwertigen Carbonsäuren und deren veresterbaren Derivaten, insbesondere Anhydriden, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und-/oder Reste von Hydroxycarbonsäuren enthalten, wobei zumindest ein Teil der Reste über ethylenisch ungesättigte copolymerisierbare Gruppen verfügen muß.

Als mehrwertige, insbesondere zweiwertige, gegebenenfalls ungesättigte Alkohole eignen sich die üblichen, insbesondere acyclische Gruppen, cyclische Gruppen als auch beide Arten von Gruppen aufweisenden Alkandiole und Oxaalkandiole, wie. z. B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Dipropylenglykol, Cyclohexandiol-1,2, 2,2-Bis-(hydroxycyclohexyl)-propan, Trimethylolpropanmonoallylether oder Butendiol-1,4. Ferner können ein-, drei- oder höherwertige Alkohole, wie z. B. Ethylenhexanol, Fettalkohole, Benzylalkohole, 1,2-Di-(allyloxy)-propanol-(3), Glycerin, Pentaerythrit oder Trimethylolpropan in untergeordneten Mengen mitverwendet werden.

Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäure bzw. deren Derivate sind zweibasische olefinisch ungesättigte, vorzugsweise $\alpha,\beta$-olefinisch ungesättigte Carbonsäuren, wie z. B. Maleinsäure, Fumarsäure, Chlormaleinsäure, Itaconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z. B. Bernsteinsäure, Glutarsäure, Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z. B. Ethylhexansäure, Fettsäuren, Methacrylsäure, Acrylsäure, Fettsäuren, Propion-1,2,4,5-Benzoltetracarbonsäure. Vorzugsweise verwendet werden Maleinsäure bzw. deren Anhydrid und Fumarsäure.

Auch ungesättigte Polyester, die unter Verwendung von Dicyclopentadien hergestellt wurden, lassen sich vorteilhaft einsetzen.

Gemische ungesättigter Polyester, darunter auch solche, die in den Vinylmonomeren (b) nur beschränkt löslich sind und leicht kristallisieren, können ebenfalls vorteilhaft eingesetzt werden. Solche leicht kristallisierende ungesättigte Polyester können z. B. aus Fumarsäure, Adipinsäure, Terephthalsäure, Ethylenglykol, Butandiol-1,4, Hexandiol-1,6 und Neopentylglykol aufgebaut sein.

Die ungesättigten Polyester besitzen Säurezahlen von 5 bis 200, vorzugsweise von 20 bis 85 und mittlere Molekulargewichte von ungefähr 800 bis 6 000, vorzugsweise von etwa 1 000 bis 4 000.

Die amorphen und gegebenenfalls kristallisierbaren ungesättigten Polyester werden im allgemeinen durch Schmelzkondensation oder Kondensation unter azeotropen Bedingungen aus ihren Ausgangskomponenten nach kontinuierlichen oder diskontinuierlichen Verfahren hergestellt.

Die erfindungsgemäßen härtbaren, ungesättigten Polyesterformmassen enthalten im allgemeinen 20 bis 90, vorzugsweise 30 bis 80 Gew.-% ungesättigten Polyester, bezogen auf das Gesamtgewicht der Komponenten A und B.

B. Als copolymerisierbare, ethylenisch ungesättigte monomere Verbindungen kommen die üblicherweise zum Herstellen ungesättigter Polyesterformmassen verwendeten Allyl- und vorzugsweise Vinylverbindungen in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, $\alpha$-Methylstyrol, Chlorstyrol, Vinyltoluol, Divinylbenzol und Diallylphthalat. Die Komponente B ist in den Polyesterformmassen im allgemeinen in einer Menge von 10 bis 80, vorzugsweise von 20 bis 70 Gew.-%, bezogen auf das Gesamtgewicht der Komponente A und B enthalten.

C. Die elastomeren Blockcopolymeren sind kautschukartige Copolymere aus 40 bis 95 Gew.-% eines Diolefins, z. B. Butadien, Isopren oder Chloropren, und 60 bis 5 Gew.-% eines Vinylaromaten, z. B. Styrol oder $\alpha$-Methylstyrol. Sie werden durch anionische Polymerisation, z. B. mit lithium- oder natriumorganischen Verbindungen, hergestellt und weisen eine blockartige Struktur auf. Die Blöcke können je nach Herstellverfahren scharfe oder verschmierte Übergänge haben. Die einzelnen Blöcke können nur aus einem einzigen Monomeren bestehen, es können aber auch zwei Monomere in einem Block in unregelmäßiger Verteilung copolymerisiert vorliegen. Das Blockcopolymere kann aus zwei, drei, vier oder noch mehr Einzelblöcken bestehen. Zur Erzielung besonderer Effekte kann das Blockcopolymere Carboxylgruppen enthalten. Das Molekulargewicht der Blockcopolymeren liegt zwischen 20 000 und 200 000, vorzugsweise zwischen 50 000 und 150 000. Sie sind in den Formmassen in Mengen von 5 bis 25, vorzugsweise von 8 bis 20 Gew.-%, bezogen auf A + B, enthalten.

D. Die Polyalkylenethermischpolymerisate werden hergestellt durch radikalische Polymerisation von 40 bis 95, vorzugsweise 50 bis 90 Gew.-% ethylenisch ungesättigter Monomerer in Gegenwart von 60 bis 5, vorzugsweise 50 bis 10 Gew.-% mindestens eines Polyalkylenethers mit einem Molekulargewicht von 6 500 bis 25 000, vorzugsweise von 8 000 bis 20 000, der im Mittel 0,5 bis 2, vorzugsweise 0,8 bis 1,2 ethylenisch ungesättigte Endgruppen trägt.

Als ethylenisch ungesättigte Monomere, die als solche oder in Form von Mischungen verwendet werden können, eignen sich Vinylaromaten wie Styrol, α-Methylstyrol, Butylstyrol, Chlorstyrol, Vinyltoluol, Inden ; Vinylester mit 3 bis 20 C-Atomen, wie Vinylformiat, -acetat, -propionat, -butyrat, -decanoat ; Vinylether mit 3 bis 20 C-Atomen wie Methyl-, Ethyl-, (Hydroxy)butylvinylether ; Acrolein, Vinylmethyl-, -ethylketon ; α,β-olefinisch ungesättigte Mono- oder Dicarbonsäuren mit 3 bis 5 C-Atomen wie (Meth)acryl-, Croton-, Malein- oder Fumarsäure, deren Nitrile, (Halb)amide, welche gegebenenfalls noch N-substituiert sein können, z. B. N-Methyl-, N-Ethyl-, N-Butyl- oder Dimethylaminoethyl(meth)- acrylamid ; die Alkyl(halb) ester oder Dialkylester derartiger (Di)carbonsäuren mit 1 bis 20 C-Atomen im Alkylrest, wie Methyl-, Ethyl-, Butyl-, 2-Ethylhexyl-, Lauryl- oder Stearyl(meth) acrylat, (Di)methyl-, (Di)ethyl-, (Di)butyl- oder (Di)ethylhexylmaleinat oder -fumarat ; Alkylester derartiger (Di)-carbonsäuren, welche noch funktionelle Gruppen im Alkylrest enthalten wie Hydroxyethyl- oder -propyl(meth)acrylat, Butandiol(meth)acrylat, 2-Chlorpropyl(meth)acrylat, Ethylglykol(meth)acrylat, Glycidyl(meth)acrylat ; Allylverbindungen wie Allylalkohol, -ether oder -halogenide, N-Vinyl-Verbindungen wie N-Vinylformamid, -pyrrolidon, -caprolactam oder -imidazol. Vorzugsweise werden Vinylaromaten, (Meth)acrylsäure, deren Ester aus 1 bis 8 C-Atome enthaltenden Alkanolen und/oder Vinylester verwendet. Besonders bevorzugt sind dabei Styrol, α-Methylstyrol, Acrylsäure, Methacrylsäure, Methylmethacrylat, Butyl- und 2-Ethylhexylacrylat sowie Vinylacetat und -propionat.

Ausgangskomponenten für die ungesättigten Polyalkylenether sind übliche lineare Polyether mit ein oder zwei Hydroxylendgruppen. Sie werden hergestellt durch Polymerisation von Alkylenoxiden, wie z. B. Ethylenoxid oder Propylenoxid mit mono- oder difunktionellen Startern, wie z. B. Diolen, wie Ethylenglykol, Propylenglykol oder Diethylenglykol ; Dicarbonsäuren, wie Adipinsäure, Bernsteinsäure oder Terephthalsäure ; Monoalkoholen, wie langkettigen Alkoholen mit 8 bis 18 C-Atomen oder Monocarbonsäuren, wie Ethylhexansäure, Buttersäure und Benzoesäure.

Diese Polyalkylenether werden umgesetzt mit einer organischen Verbindung, die sowohl eine ethylenisch ungesättigte Doppelbindung als auch eine reaktive Gruppe trägt. Beispiele für solche Verbindungen sind :

α,β-olefinisch ungesättigte Carbonsäuren wie Acrylsäure, Methacrylsäure oder Crotonsäure, deren Hydroxyalkylester wie Hydroxyethyl-, -propyl- oder Butandiol-(meth)acrylat ; Halbester olefinisch ungesättigter Dicarbonsäuren wie Methyl-, Ethyl-, Butyl- oder 2-Ethylhexylmaleat oder -fumarat ; olefinisch ungesättigte Alkohole wie Allylalkohol ; Etheralkohole wie Neopentylglycolmonoallylether oder Hydroxybutylnonylether, wobei die genannten Verbindungen vorteilhaft im Gemisch mit Diisocyanaten zur Anwendung kommen, ferner Methylolverbindungen wie N-Methylol(meth)acrylamid, Anhydride wie (Meth)acrylsäureanhydrid oder Maleinsäureanhydrid, Epoxy-Verbindungen wie Glycidyl(meth)acrylat. Als Diisocyanate seien beispielsweise genannt : Hexamethylen-diisocyanat, Isophorondiisocyanat, 4,4'-Diphenylmethan-diisocyanate und Toluylendiisocyanat. Ungesättigte Polyalkylenether können ferner erhalten werden, indem eine organische Verbindung, die sowohl ethylenisch ungesättigt ist als auch eine Hydroxyl- oder Carboxylgruppe enthält, als Reaktionsteilnehmer, beispielsweise als Startermolekül, bei der Herstellung des Polyalkylenethers mitverwendet wird. Als Beispiele solcher organischer Verbindungen sind zu nennen :

Maleinsäurehalbester, Hydroxypropyl(meth)acrylat und (Meth)-acrylsäure. Bei einer bevorzugten Ausführungsform werden Polyalkylenether mit annähernd äquivalenten Mengen Maleinsäureanhydrid und Bernsteinsäureanhydrid zum Halbester umgesetzt.

Die Copolymerisation kann thermisch oder durch Bestrahlung aktiviert werden. Vorzugsweise werden zur Polymerisation jedoch freie Radikale bildende Katalysatoren in Mengen von 0,01 bis 10 Gew.-%, vorzugsweise von 0,05 bis 3 Gew.-%, bezogen auf das Gewicht der Monomeren, verwendet. Als freie Radikale bildende Katalysatoren werden die für die Vinylpolymerisation bekannten Typen verwendet. Geeignet sind beispielsweise Acylperoxide wie Benzoylperoxid, Acetylperoxid, Lauroylperoxid ; Alkylperoxide wie Dicumyl- oder Di-tert.-butylperoxid ; Hydroperoxide wie Benzoylhydroperoxid, Cumolhydroperoxid ; Perester wie tert.-Butylperoctoat, -benzoat, -pivalat oder -neodecanoat ; Percarbonate, wie Diisopropylperoxydicarbonat, Azoverbindungen, wie α,α'-Azobis-isobutyronitril, α,α'-Azo-2-methylbutyronitril, Dimethyl-α,α'-azoisobutyrat, Redox-Systeme, Dibenzoylperoxid-Benzoin, Persulfate und Perborate. Gemische von Katalysatoren können ebenfalls verwendet werden.

Das Einbringen des Katalysators in die Reaktionsmischung ist für den Ablauf der Copolymerisation nicht entscheidend. Man kann beispielsweise einen geeigneten Katalysator im Monomeren lösen und diese Lösung zu dem erwärmten ungesättigten Polyalkylenether geben, oder man setzt den Katalysator dem vorgelegten Polyalkylenether zu, erwärmt und läßt dann das Monomere kontinuierlich oder portionsweise zum ungesättigten Polyalkylenether zulaufen. Man kann auch alle drei Komponenten, das Monomere, den ungesättigten Polyalkylenether und den Katalysator, mischen und gemeinsam erhitzen oder den Katalysator in das Reaktionsgemisch aus Monomeren und ungesättigtem Polyalkylenether einbringen. Welcher Methode der Vorzug gegeben wird, hängt von den Mengenverhältnissen Polyalkylenether-Monomeres und den Reaktionsbedingungen ab. Die Reaktionstemperatur richtet sich nach dem gewählten Monomeren sowie nach dem verwendeten Katalysatorsystem. Sie liegt im allgemeinen zwischen 50 °C und 180 °C, vorzugsweise zwischen 70° und 160 °C, wobei sich Reaktionszeiten von 0,5 bis 20 Stunden ergeben. Es kann jedoch auch bei tieferen oder höheren Temperaturen, gegebenenfalls auch unter Druck, beispielsweise zwischen 1 und 10 bar, polymerisiert werden.

Die Polyalkylenethermischpolymerisate sind in dem Gemisch in Mengen von 0,1 bis 5, vorzugsweise 0,5 bis 3 Gew.-%, bezogen auf A + B, enthalten.

E. Als Verstärkungsfasern kommen in Frage anorganische oder organische Fasern als Rovings oder flächige, gegebenenfalls daraus gewebte Gebilde, z. B. aus Glas, Kohlenstoff, Asbest, Zellulose und synthetischen organischen Fasern, wie Polycarbónsäureester, Polycarbonate und Polyamide.

Die Verstärkungsfasern können in Mengen von 5 bis 300, vorzugsweise 10 bis 150 Gew.-%, bezogen auf die Komponenten A + B verwendet werden.

F. Als flüssige Dienpolymere sind Homo- oder Copolymere des Butadiens oder Isoprens mit bis zu 50 Gew.-% Comonomeren geeignet. Comonomere können z. B. Acrylnitril, Styrol oder Acrylate, sowie Acrylsäure oder Methacrylsäure sein. Das Molekulargewicht der Dienpolymeren liegt zwischen 500 und 10 000, vorzugsweise zwischen 800 und 6 000. Styrolische Lösungen dieser niedermolekularen Dienpolymeren sind mit ungesättigten Polyesterharzen vollkommen unverträglich, auch in Gegenwart der erfindungsgemäßen Emulsionsstabilisatoren. Ersetzt man aber einen Teil der erfindungsgemäßen Blockcopolymeren C in den Polyesterformmassen durch diese Dienpolymeren F, so erhält man mit dem Stabilisator D eine stabile Emulsion. Durch diese Dienpolymeren wird die Viskosität der Kautschuklösung drastisch gesenkt. Dadurch wird — vor allem bei niedrigviskosen Polyesterformmassen — die Verarbeitbarkeit besser und die Partikelgröße der Kautschukteilchen im Formteil wird verringert, was eine weitere Verbesserung der Zähigkeit zur Folge hat.

Die Formmassen enthalten 1 bis 20, vorzugsweise 1-15, besonders bevorzugt 3 bis 10 Gew.-%, bezogen auf A + B, der Dienpolymeren F.

G. Übliche Polymerisationsinitiatoren sind Peroxide oder andere in der Wärme Radikale bildende organische Verbindungen in Mengen von 0,05 bis 5 Gew.-%, vorzugsweise von 0,1 bis 3 Gew.-%, bezogen auf das Gesamtgewicht der Komponenten A und B. Als Radikale liefernde Initiatoren seien beispielhaft genannt : Benzoylperoxid, tert, -Butylperoctoat, tert.-Butylperbenzoat, Cyclohexanon-peroxid, tert.-Dibutyl-peroxid und Hydroperoxide, ferner Azoverbindungen, wie Azodiisobutyronitril oder andere organische Verbindungen mit einer labilen Kohlenstoff-Kohlenstoff-Bindung.

Setzt man den peroxid-initiierten Formmassen übliche Polymerisationsbeschleuniger, wie z. B. Co-, Mn-, Sn- oder Ce-Salze organischer Säuren oder Amine, wie N,N-Dimethylanilin oder N,N-Diethylanilin zu, dann kann die Härtung auch ohne Temperaturerhöhung durchgeführt werden, wenn Hydroperoxide, bzw. Benzoylperoxid zum Einsatz kommen. Bei Verwendung üblicher Lichtinitiatoren, wie z. B. Benzoinether, Benzilketalen oder Acylphosphinverbindungen kann die Härtung durch Bestrahlen mit Licht der Wellenlänge 200 bis 500 nm durchgeführt werden.

Als Inhibitoren kommen die üblichen in Frage, wie z. B. Hydrochinon, 2,6-Dimethylhydrochinon, tert.-Butylbenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemein in einer Menge von 0,005 bis 0,2, vorzugsweise 0,01 bis 0,1 Gewichtsprozent, bezogen auf die Komponenten A und B, enthalten.

Als weiterhin gegebenenfalls mitzuverwendende inerte Lösungsmittel kommen Ketone, Ester, Kohlenwasserstoffe in Mengen bis zu 100 Gew.-%, bezogen auf A + B, in Frage.

Als Gleitmittel kommen beispielsweise Zink-, Magnesium- und Calciumstearat sowie Polyalkylenetherwachse in Betracht.

Geeignete Füllstoffe sind z. B. übliche feinpulverige oder körnige anorganische Füllstoffe, wie Kreide, Kaolin, Quarzmehl, Dolomit, Schwerspat, Metallpulver, Zement, Talkum, Kieselgur, Holzmehl, Holzspäne, Pigmente und dergleichen. Sie werden in Mengen von 20 bis 200 Gew.-%, bezogen auf A + B, eingesetzt.

Als Verdickungsmittel seien beispielsweise Erdalkalioxide, wie Calciumoxid, Calciumhydroxid, Magnesiumhydroxid und vorzugsweise Magnesiumoxid sowie Gemische dieser Oxide bzw. Hydroxide genannt. Diese können auch teilweise durch Zinkoxid ersetzt sein. Auch Polyisocyanate sind in manchen Fällen geeignet. Die Verdickungsmittel können den Formmassen in Mengen von 0,5 bis 5 Gew.-%, bezogen auf A + B, zugesetzt werden.

Als gegebenenfalls zusätzlich mitzuverwendende schrumpfmindernde Zusätze kommen beispielsweise thermoplastische Polymere, wie Polystyrol, Polyvinylacetat oder Poly(meth)acrylate in Mengen von 1 bis zu etwa 30 Gew.-%, bezogen auf die Komponenten A + B, in Betracht.

Die erfindungsgemäßen Formmassen können in flüssiger und in eingedickter Form verarbeitet werden. Im Rahmen der vorliegenden Erfindung sind die flüssigen Formmassen bevorzugt. Sie enthalten keine Verdickungsmittel und schrumpfmindernde Zusätze und verhältnismäßig wenig, vorzugsweise 10 bis 100 Gew.-%, bezogen auf A + B, Füllstoffe. Hierbei ist ein Teil, vorzugsweise 10 bis 50 Gew.-% der elastomeren Blockcopolymeren C durch niedermolekulare Polydiene F ersetzt. Die Viskosität dieser Formmassen — ohne Verstärkungsfasern und Füllstoffe — liegt zwischen 100 und 5 000, vorzugsweise zwischen 200 und 5 000 mPas bei 23 °C.

Ein übliches Verfahren zur Herstellung solcher Formmassen besteht darin, daß eine Lösung von ungesättigtem Polyester A in Monomeren B mit einer Lösung von elastomeren Blockcopolymeren C und niedermolekularem Polydien F in Monomeren B, zusammen mit Polyalkylenethermischpolymerisat D vermischt und durch kräftiges Rühren emulgiert wird. Nach einem besonders bevorzugten Verfahren wird eine Lösung des ungesättigten Polyesters A in Monomeren B zunächst mit etwa 1/3 der insgesamt notwendigen Menge Polyalkylenethermischpolymerisat D versetzt und unter kräftigem Rühren bei 40 bis 100 °C granuliertes Blockcopolymer C eingetragen. Innerhalb von 2 bis 5 Stunden liegt dann eine Emulsion vor, zu der nach dem Abkühlen auf Raumtemperatur die restlichen 2/3 Polyalkylenethermischpolymerisat D eingerührt wird. Während der Emulsionsherstellung sind übliche Inhibitoren in der Mischung vorhanden. Polymerisationsinitiatoren und -beschleuniger können entweder schon in der Polyesterlösung enthalten sein oder erst zu der Emulsion zugegeben werden. Zu der Emulsion werden dann gegebenenfalls noch Füllstoffe, Lösungsmittel, Thixotropiermitel und Gleitmittel zugesetzt ; mit diesem flüssigen Harzgemisch werden dann die Verstärkungsfasern E getränkt. Die fertige Formmasse kann dann nach verschiedenen, bekannten Verfahren verarbeitet werden, wie z. B. in der Monographie von P. H. Selden, Glasfaserverstärkte Kunststoffe, Springer-Verlag 1967, Seiten 506 bis 615 beschrieben. Darüberhinaus kann die Formmasse auch nach dem Vakuumtiefziehverfahren verarbeitet werden. Die Aushärtung der Formmassen kann ebenfalls auf übliche Weise, z. B. durch Warmhärtung bei erhöhter Temperatur, Kalthärtung bei Zusatz von Beschleunigern oder durch Bestrahlung mit UV-Licht bei Zusatz von Lichtinitiatoren erfolgen. Die erhaltenen Formteile zeichnen sich durch gute mechanische Eigenschaften, insbesondere durch eine hohe Schlagzähigkeit und geringe Rißanfälligkeit, sowie durch eine gleichmäßige, glatte Oberfläche aus.

Eingedickte Formmassen weisen einen hohen Füllstoffgehalt auf. Durch Zusatz üblicher Verdickungsmittel kann ihre Viskosität so stark erhöht werden, daß klebfreie, aber noch verformbare Teile (SMC) entstehen, die dann auf übliche Weise ausgehärtet werden können. Bei Zusatz spezieller Thermoplasten erhält man SMC-Halbzeug, das zu schrumpfarmen Formteilen mit glatter Oberfläche aushärtet.

Die in den Beispielen genannten Teile und Prozente beziehen sich auf das Gewicht.

A. Herstellung der ungesättigten Polyesterharze

1. Ein ungesättigter Polyester mit Säurezahl 31 wurde hergestellt durch Umsetzung von Maleinsäureanhydrid und Propylenglykol-1,2 im Molverhältnis 1 : 1. Er wurde 65 %ig in Styrol gelöst und mit 120 ppm Hydrochinon stabilisiert.

2. Ein ungesättigter Polyester mit Säurezahl 45 wurde hergestellt durch Umsetzung von Maleinsäureanhydrid, o-Phthalsäureanhydrid, Propylenglykol-1,2 und Diethylenglykol im Molverhältnis 1 : 0,25 : 1 : 0,3. Er wurde 65 %ig in Styrol gelöst und mit 120 ppm Hydrochinon stabilisiert.

3. Ein ungesättigter Polyester mit Säurezahl 50 wurde hergestellt aus Maleinsäureanhydrid, o-Phthalsäureanhydrid und Propylenglykol im Molverhältnis 1 : 0,5 : 1,5. Er wurde 65 %ig in Styrol gelöst und mit 100 ppm Hydrochinon stabilisiert.

C. Herstellung von Kautschuklösungen

Unter Rühren wurden in einer Stickstoffatmosphäre verschiedenen Blockcopolymere in zerkleinerter Form zusammen mit 100 ppm Hydrochinon und 50 ppm 2,6-Dimethylchinon 70 %ig in Styrol gelöst, wobei die Temperatur bei 80 gehalten wurde. In Tabelle 1 sind die Kautschuke aufgeführt. Dabei bedeuten :

St = Styrol  Bu = Butadien  Is = Isopren.

(Siehe Tabelle 1 Seite 7 f.)

Tabelle 1

| Kautschuk | Handelsname (Firma) | Zusammensetzung %St | %Dien | Struktur | MG |
|---|---|---|---|---|---|
| 1 | Solprene 312 (Phillips) | 30 | 70 Bu | Zweiblock mit Säurezahl 7 | nicht ermittelt |
| 2 | Solprene 415 (Phillips) | 40 | 60 Bu | 4-Sternblock (St außen) | 150.000 |
| 3 | Solprene 1205 (Phillips) | 24 | 76 Bu | Zweiblock (verschmiert) | |
| 4 | Cariflex TR 1107 (Shell) | 15 | 85 Is | Dreiblock St-Is-St | 120.000 |
| 5 | | 19 | 76 Is 5 Bu | Dreiblock St-Is-St/Bu | 130.000 |
| 6 | Tufprene A (Asahi) | 40 | 60 Bu | Vierblock (verschmiert) | |

D. Herstellung der Polyalkylenethermischpolymerisate

a) Herstellung der Polyalkylenether

Vorprodukt a1 (erfindungsgemäß) In einem Rührkessel wurden 59 Teile eines aus 1 Mol Ethylenglykol und 200 Mol Ethylenoxid erhaltenen Polyethers, 0,6 Teile Maleinsäureanhydrid, 0,65 Teile Bernsteinsäureanhydrid und 15 Teile Toluol eine Stunde lang zum Rückfluß erhitzt. Aus diesen Angaben errechnet sich ein Molekulargewicht des Polyethers von ~ 9 000.

Vorprodukt a2 (Vergleich) 68,4 Teile eines durch Umsetzung eines Gemisches von Talgfettalkoholen, die 14 bis 18 C-Atome enthalten, mit 50 Mol Ethylenoxid je Mol Alkohol erhaltenen Polyethers werden mit 3,6 Teilen Maleinsäureanhydrid und 12 Teilen Toluol eine Stunde zum Rückfluß erhitzt. Aus diesen Angaben errechnet sich eine Molekulargewicht des Polyethers von ~ 2 300.

Vorprodukt a3 (Vergleich) Analog der Herstellung des Vorproduktes a2 werden 75 Teile eines durch Umsetzung von Talgfettalkoholgemisch mit ca. 100 Mol Ethylenoxid je Mol Alkohol erhaltenen Polyethers mit 3 Teilen Maleinsäureanhydrid umgesetzt. Das Molekulargewicht beträgt rechnerisch 4 500.

b) Copolymerisation

Das Vorprodukt wird in einem Rührkessel auf 120 bis 130 °C erhitzt. Man gibt 1/4 der Monomeren sowie 1/5 der Starterlösung aus 2,5 Teilen Benzoylperoxid und 18 Teilen Toluol in 10 bis 20 Minuten zu, die restlichen Monomeren und die restliche Starterlösung während 2 Stunden. Nach weiteren drei Stunden werden 0,8 Teile Ameisensäure zugesetzt, dann werden bei 110° bis 130 °C bei 50 mbar flüchtige Anteile abdestilliert. Schließlich gibt man 0,05 Teile Hydrochinon zu und verdünnt unter Kühlung mit 245 Teilen Styrol. Ergebnisse siehe Tabelle 2.

Tabelle 2

| Misch-<br>polymerisat | Vorprodukt<br>(Teile) | | Monomere<br>(Teile) |
|---|---|---|---|
| 1 | 40 | a1 | 131 Styrol |
| 2 | 80 | a1 | 100 Styrol |
| 3 | 40 | a1 | 122 Styrol,<br>9 Acrylsäure |
| 4 | 40 | a1 | 66 Styrol,<br>65 n-Butylacrylat |
| 5 | 80 | a2 | 100 Styrol |
| 6 | 40 | a3 | 66 Styrol,<br>65 n-Butylacrylat |
| 7 | nach Beispiel 2 der DOS 25 34 039<br>(MG des Polyethers : 4000) | | |

Die Mischpolymerisate 5 bis 7 sind nicht erfindungsgemäß.

F. Lösungen der niedermolekularen Polydiene

Folgende Polydiene werden eingesetzt :

F1 : Lithene AL (Lithene Corp.) mit einem Molekulargewicht von 900, bestehend aus Polybutadien.

F2 : Hycar CTBN (Goodrich Chem), MG 3500, Copolymerisat aus Butadien mit 17 % Acrylnitril und einem Gehalt von 2,4 % COOH-Gruppen.

F3 : Ricon 100 (Colorad Chem.), MG 2200, Copolymerisat von 80 % Butadien und 20 % Acrylnitril. 40 %ige Lösungen in Styrol wurden wie unter C beschrieben, hergestellt.

Prüfung der Emulsionsstabilität

Lösungen von ungesättigten Polyesterharzen A und von Blockcopolymeren C und gegebenenfalls niedermolekularen Polydienen F wurden zusammen mit den Polyalkylenmischpolymerisaten D in den in den Tabellen angegeben Mischungsverhältnissen intensiv vermischt (1 min lang bei 2 000 Upm mit einem Lamellenrührer) und in verschlossenen Glasflaschen bei Raumtemperatur aufbewahrt. Instabile Mischungen bilden bereits nach kurzer Zeit zwei Schichten aus, während stabile Emulsionen sich im Beobachtungszeitraum nicht entmischen. Ergebnisse siehe Tabelle 3.

Bei den Versuchen 1 bis 6 wurden verschiedene Blockcopolymere C eingesetzt, jeweils ohne und mit dem Stabilisator Polyalkylenethermischpolymerisat D. Bei den nicht erfindungsgemäßen Versuchen 7 wurden verschiedene Stabilisatoren D eingesetzt. Bei den Versuchen 8 bis 10 (8b, 9b, 10b erfindungsgemäß) wurden zusätzlich zu den Blockcopolymeren C noch Polydiene F zugesetzt. Bei den nicht erfindungsgemäßen Versuchen 11 und 12 wurde als schrumpfmindernde Zusatz ein Polymethylmethacrylat zugesetzt, im Versuch 12b wurde ein nicht erfindungsgemäßer Stabilisator verwendet.

Tabelle 3

| Versuch | Polyester (Teile) | | Blockcopolymeres (Teile) | | Polydien (Teile) | | Stabilisator (Teile) | | Stabilität |
|---|---|---|---|---|---|---|---|---|---|
| 1a | 60 | A1 | 36 | C2 | – | | – | | 3h |
| 1b | 60 | A1 | 36 | C2 | – | | 4 | D1 | 70d |
| 2a | 60 | A2 | 36 | C1 | – | | – | | 10 min |
| 2b | 60 | A2 | 36 | C1 | – | | 4 | D1 | 22d |
| 3a | 60 | A1 | 36 | C3 | – | | – | | 3h |
| 3b | 60 | A1 | 36 | C3 | – | | 4 | D1 | 70d |
| 4a | 60 | A1 | 36 | C4 | – | | – | | 3h |
| 4b | 60 | A1 | 36 | C4 | – | | 4 | D1 | 70d |
| 5a | 60 | A1 | 36 | C5 | – | | – | | 3h |
| 5b | 60 | A1 | 36 | C5 | – | | 4 | D1 | 84d |
| 6a | 60 | A1 | 36 | C6 | – | | – | | 24h |
| 6b | 60 | A1 | 36 | C6 | – | | 4 | D1 | 84d |
| 7a | 60 | A1 | 36 | C6 | – | | – | | 1d |
| 7b | 60 | A1 | 36 | C6 | – | | 4 | D2 | 30d |
| 7c | 60 | A1 | 36 | C6 | – | | 4 | D3 | 30d |
| 7d | 60 | A1 | 36 | C6 | – | | 4 | D4 | 30d |
| 7e | 60 | A1 | 36 | C6 | – | | 4 | D5 | 5h |
| 7f | 60 | A1 | 36 | C6 | – | | 4 | D6 | 2d |
| 8a | 60 | A1 | 27 | C1 | 9 | F2 | – | | 5 min |
| 8b | 60 | A1 | 27 | C1 | 9 | F2 | 4 | D1 | 19d |
| 9a | 60 | A1 | 18 | C1 | 18 | F3 | – | | 17h |
| 9b | 60 | A1 | 18 | C1 | 18 | F3 | 4 | D1 | 19d |
| 10a | 60 | A1 | 18 | C1 | 18 | F1 | – | | 17h |
| 10b | 60 | A1 | 18 | C1 | 18 | F1 | 4 | D1 | 19d |
| 11a | 60 | A1 | 40 | C1 | 10 | PMMA | – | | 24h |
| 11b | 60 | A1 | 40 | C1 | 10 | PMMA | 10 | D4 | 33d |
| 12a | 60 | A1 | 20 | C1 | 20 | PMMA | 4 | D4 | 5d |
| 12b | 60 | A1 | 20 | C1 | 20 | PMMA | 4 | D7 | 21h |

Beispiel 1

Härtung von füllstoffhaltigen Naßpresslaminaten

130 Teile einer fünflagigen Glasfasermatte wurde mit einer Mischung aus 100 Teilen Polyesterlösung Al, gegebenenfalls zusammen mit Kautschuklösungen und 165 Teilen Kreide als Füllstoff getränkt. Die Polyesterlösung enthielt 1,5 % tert. Butylperbenzoat als Initiator. Das Laminat wurde zwischen Poly-

9

esterfolie in einer Stahlform zu 4 mm dicken Platten (16 × 16 cm) verpreßt, und bei 140 °C und 200 bar 10 min in lang ausgehärtet.

Zur Beurteilung der gleichmäßigen Verteilung der Kautschukphase und der Rißanfälligkeit der Formteile wurden Prüfkörper (8 × 8 cm) zwischen zwei Metallringen (lichte Weite 6 cm) eingespannt und darauf aus 50 cm Höhe eine Stahlkugel (761 g, Durchmesser 5,7 cm) fallen gelassen. Die der Schlagseite entgegengesetzte Unterseite wurde mit einer roten Farbstofflösung eingesprüht, nach 5 min mit Wasser abgewaschen und getrocknet. Neben der direkten Schädigungszone (roter Kern) erscheinen auch solche Stellen rot angefärbt, die auf Prositäten oder ·eine ungleichmäßige Kautschukverteilung an der Oberfläche zurückzuführen sind. Die Oberfläche zeigt dann ein fleckiges Ansehen, während eine als « gut » beurteilte Oberfläche außer der Schädigungszone keine oder nur sehr geringe Einfärbung zeigt.

Zur Beurteilung der Formteilschädigung durch den Schlag wurde der Probekörper so in zwei Hälften zerschnitten, daß auch der rote Kern mitten durchgeschnitten wird. An der Schnittfläche läßt sich die Eindringtiefe des roten Farbstoffs mit Hilfe einer Meßlupe ermitteln. Je höher die Eindringtiefe, desto schlagempfindlicher ist das Formteil.

Bei den Versuchen 2 bis 5 wurden verschiedene Blockcopolymere C eingesetzt, jeweils ohne und mit Stabilisator D. Bei den erfindungsgemäßen Versuchen 6 und 7 wurden zusätzlich noch Polydiene F zugesetzt. Beim Versuch 8 wurde nach der DOS 26 57 808 Polymethylmethacrylat PMMA mit dem Polyalkylenethermischpolymerisat D stabilisiert, im Versuch 8b wurde das Polyalkylenethermischpolymerisat D selbst als schrumpfminderndes Additiv eingesetzt.

### Tabelle 4

| Versuch | Polyester (Teile) | Block-copolymeres | Polydien (Teile) | Stabilisator (Teile) | Oberfläche | Eindring-tiefe [mm] |
|---|---|---|---|---|---|---|
| 1 | 100 | – | – | – | gut | 4,0 |
| 2a | 100 | 67 C1 | – | – | fleckig | 1,9 |
| 2b | 100 | 60 C1 | – | 7 D1 | gut | 1,0 |
| 3a | 100 | 67 C2 | – | – | fleckig | 2,4 |
| 3b | 100 | 60 C2 | – | 7 D1 | gut | 1,1 |
| 4a | 100 | 67 C5 | – | – | fleckig | 1,7 |
| 4b | 100 | 60 C5 | – | 7 D1 | gut | 1,6 |
| 5a | 100 | 67 C6 | – | – | fleckig | 2,0 |
| 5b | 100 | 60 C6 | – | 7 D1 | gut | 1,3 |
| 5c | 100 | 53 C6 | – | 14 D1 | gut | 1,2 |
| 6 | 100 | 37 C6 | 37 F3 | 7 D1 | gut | 1,8 |
| 7 | 100 | 45 C6 | 15 F1 | 7 D1 | gut | 1,2 |
| 8a | 100 | | 60 PMMA | 7 D1 | gut | 4,0 |
| 8b | 100 | | | 43 D1 | gut | 4,0 |

### Beispiel 2 (Vergleichsversuch)

Härtung von füllstoff-freien Naßpreßlaminaten

Wie in Beispiel 1 beschrieben, wurden Naßpreßlaminate hergestellt und ausgehärtet, wobei aber als Bindemittel 100 Teile Polyesterharz A2 ohne Zusatz von Kreide verwendet wurden. Als Kautschuk wurden 67 Teile Blockcopolymerisat-Lösung C6 zugesetzt, als Stabilisator 7 Teile D1. Das erhaltene Laminat zeigt eine sehr gleichmäßige Kautschukverteilung ; die Eindringtiefe beim Kugelfalltest beträgt 1,7 mm. Läßt man im Vergleichsversuch den Stabilisator weg, so ergibt sich eine sehr ungleichmäßige Kautschukverteilung ; dieses Laminat knistert beim Biegen. Läßt man in einem weiteren Vergleichsversuch auch noch den Kautschuk weg, so mißt man an dem Laminat eine Eindringtiefe beim Kugelfalltest von 4,0 mm.

Auch außerhalb der Schlagzone ist das Laminat in diesem Fall mit zahlreichen Rissen durchsetzt.

Beispiel 3 (Vergleichsversuch)

Zur Prüfung schrumpfarmer Prepegs wurden Glasfasermatten (geschnittene Rovings, ca. 2,6 cm lang) mit folgender Harz/Füllstoffmischung getränkt und zwischen Polyethylenfolien 4 Wochen bei 23 °C gelagert :

60 Teile Polyesterharz A1
40 Teile Kautschuklösung C6 bzw. C2
3 Teile Magnesiumhydroxid
3 Teile tert.-Butylperbenzoat (50 %ig im Weichmacher)
6 Teile Farbpaste, grau
4,5 Teile Zinkstearat
4 Teile bzw. 10 Teile Stabilisatorlösung D3

Die eingedickten Formmassen wurden nach Entfernung der Abdeckfolien in einem polierten Stahlwerkzeug 5 min bei 145 °C, 7.45 N/mm² verpreßt. Die Formteile zeigten einen guten Oberflächenglanz und eine gute Farbhomogenität. Wurden Probekörper (80 × 25 × 2 mm) aus diesen Formteilen gebogen (5 mm/min), so wurde ein Knistern erst beim Bruch oder unmittelbar davor registriert.
Wurden in zwei weiteren Versuchen mit demselben Formmassenaufbau kein Stabilisator eingesetzt, so resultierten Formteile mit schlechtem Glanz und völlig fleckiger Oberfläche. Sie sind nicht in der Praxis verwendbar.

| Kautschuklösung (Teile) | | Stabilisator D 3 (Teile) | Formteiloberfläche |
|---|---|---|---|
| 40 | C6 | 4 | guter Glanz |
| 40 | C6 | – | fleckig, matt |
| 40 | C2 | 10 | guter Glanz |
| 40 | C2 | – | fleckig, matt |

**Patentanspruch**

Härtbare ungesättigte Polyesterformmassen, enthaltend ein Gemisch aus
A. einem ethylenisch ungesättigten Polyester,
B. ethylenisch ungesättigten, mit A copolymerisierbaren Monomeren,
C. 5 bis 25 Gew.-%, bezogen auf A + B, eines elastomeren Blockcopolymeren aus 40 bis 95 Gew.-% eines Diolefins und 60 bis 5 Gew.-% eines Vinylaromaten mit einem Molekulargewicht von 20 000 bis 200 000,
D. 0,1 bis 5 Gew.-%, bezogen auf A + B, eines Polyalkylenethermischpolymerisats, hergestellt durch radikalische Polymerisation von
40 bis 95 Gew.-% ethylenisch ungesättigter Monomerer und
60 bis 5 Gew.-% eines linearen Polyalkylenethers mit einem Molekulargewicht von 6 500 bis 25 000, der im Mittel 0,5 bis 2 ethylenisch ungesättigte Endgruppen trägt,
E. 5 bis 300 Gew.-%, bezogen auf A + B, faserförmiger Verstärkungsmittel, gegebenenfalls
G. üblichen Initiatoren, Polymerisationsbeschleunigern, Inhibitoren, Gleitmitteln, inerten Lösungsmitteln, Füllstoffen, Verdickungsmitteln und schrumpfmindernden Zusätzen
dadurch gekennzeichnet, daß die Formmassen
F. 1 bis 20 Gew.-%, bezogen auf A + B, flüssiger Dienpolymer mit einem Molekulargewicht von 500 bis 10 000
enthalten und daß ihre Viskosität — ohne Verstärkungsfasern und Füllstoffe — zwischen 100 und 5 000 mPas bei 23 °C liegt.

**Claim**

A curable unsaturated polyester molding material containing a mixture of
A. an ethylenically unsaturated polyester,
B. ethylenically unsaturated monomers which can be copolymerized with A,
C. from 5 to 25 % by weight, based on A + B, of an elastomeric block copolymer of from 40 to 95 % by weight of a diolefin and from 60 to 5 % by weight of a vinylaromatic and having a molecular weight of from 20,000 to 200,000,
D. from 0.1 to 5 % by weight, based on A + B, of a polyalkylene ether copolymer prepared by free radical polymerization of

11

from 40 to 95 % by weight of ethylenically unsaturated monomers, and

from 60 to 5 % by weight of a linear polyalkylene ether having a molecular weight of from 6,500 to 25,000 and carrying on average from 0.5 to 2 ethylenically unsaturated end groups, and

E. from 5 to 300 % by weight, based on A + B, of fibrous reinforcing agents, with or without

G. conventional initiators, polymerization accelerators, inhibitors, lubricants, inert solvents, fillers, thickeners and shrinkage-reducing additives,

characterized in that the molding material contains

F. from 1 to 20 % by weight, based on A + B, of liquid diene polymers having a molecular weight of from 500 to 10,000 and

its viscosity — without reinforcing fibers and filler — is from 100 to 5,000 mPa.s at 23 °C.


**Revendication**

Matières à mouler de polyester insaturé durcissables, contenant un mélange de

A. un polyester à insaturation éthylénique,

B. des monomères à insaturation éthylénique, copolymérisables avec A,

C. 5 à 25 % en poids, rapporté à A + B, d'un copolymère en bloc, élastomère, de 40 à 95 % en poids d'une dioléfine et 60 à 5 % en poids d'un aromate vinylique d'un poids moléculaire de 20 000 à 200 000,

D. 0,1 à 5 % en poids, rapporté à A + B, d'un polymérisat thermique de polyalkylène, obtenu par polymérisation, avec formation de radicaux, de 40 à 95 % en poids de monomères à insaturation éthylénique et 60 à 5 % en poids d'un polyalkyléther linéaire, d'un poids moléculaire de 6 500 à 25 000, qui porte, en moyenne, 0,5 à 2 groupes terminaux à insaturation éthylénique,

E. 5 à 300 % en poids, rapporté à A + B, d'agents de renforcement fibreux, éventuellement

G. des amorceurs, accélérateurs de polymérisation, inhibiteurs, agents de démoulage, solvants inertes, charges, épaississants et additifs diminuant le retrait, usuels

caractérisées par le fait que les matières à mouler contiennent

F. 1 à 20 % en poids, rapportés à A + B, de polymères diéniques liquides, d'un poids moléculaire de 500 à 10 000

et que la viscosité, — sans fibres de renforcement et sans charges — est comprise entre 100 et 5 000 mPas à 23 °C.